# EUROPEAN PATENT SPECIFICATION

(11) **EP 3 916 058 B1**
(45) Date of publication and mention of the grant of the patent: **14.10.2026**
(21) Application number: 21169564.8
(22) Date of filing: 28.06.2019
(51) Int. Cl.: C09D 5/16, A01N 43/36, A01N 43/40, A01N 43/80, A01N 47/04, A01N 47/14, A01N 59/16, A01N 59/20

(54) **USE OF AEROGEL COMPOSITIONS IN MARINE PAINTS AND COATINGS**
VERWENDUNG VON AEROGEL-ZUSAMMENSETZUNGEN IN SCHIFFSFARBEN UND -BESCHICHTUNGEN
UTILISATION DE COMPOSITIONS D'AÉROGEL DANS DES PEINTURES ET REVÊTEMENTS MARINS

(30) Priority: 29.06.2018 EP 18180787
(43) Date of publication of application: 01.12.2021
(62) Document number(s) of the earlier application(s) in accordance with Art. 76 EPC: 19737025.7 / 3 814 435
(73) Proprietor: Aerogel ApS, 2100 København Ø (DK)
(72) Inventor: WALLSTRÖM, Eva, 2100 København Ø (DK)
(74) Representative: AWA Denmark A/S

(56) References cited:
- WO-A1-2009/062975
- US-A1- 2013 209 389
- US-A1- 2014 242 403
- "Lystbådmaling med minimeret biocidindhold. Miljøprojekt nr. 1663", 1 January 2015 (2015-01-01), XP009508305, ISBN: 978-87-93283-98-5, Retrieved from the Internet <URL:https://www2.mst.dk/Udgiv/publikationer/2015/03/978-87-93283-98-5.pdf>
- WALLSTROM, E. ET AL.: "A new concept for anti-fouling paint for Yachts", PROG. ORG. COAT., vol. 72, 2011, pages 109 - 114, XP055223044

## Description

### FIELD OF THE INVENTION

The present invention relates to the use of silica aerogels with a high to very high loading (60-90% w/w) of encapsulated biocidal and/or biorepellant compounds, and to anti-fouling compositions comprising such aerogels, which are especially suitable for marine use.

### BACKGROUND OF THE INVENTION

Biocides and biorepellents are substances that are used to prevent unwanted growth of biological organisms from buildings, installations, or other areas. Biocides and biorepellents are typically added to products such as protective coatings, paints and lacquers which may be applied to areas susceptible to such unwanted growth.

Protective coatings applied for exterior or interior use typically have two basic functions, protection, and decoration. Attack of biological organisms such as e.g. fungi and algae - either in the wet state or at the painted surface - can impair both the protection rendered by the paint film and its decorative effect.

Ship surfaces exposed to seawater present a special problem as they are inclined to settlement of microorganisms, plants, algae, and animals, thereby increasing the propulsion resistance of the vessel and hence reducing speed or increasing fuel consumption. This biological process is termed fouling and can be classified in two broad groups: Microfouling, which includes colonies of unicellular algae and bacteria, often referred to as "slime", and Macrofouling, which includes both plant (weed) and animal fouling. Especially Macrofouling pose problems in relation to propulsion resistance.

The propulsion resistance imposed by a heavy infestation of barnacles may push a ship's fuel consumption up by as much as 40% (*The Economist Technology* Quarterly Q3 2011, Sep 3^{rd} 2011). Solving the general fouling problem therefore has both a positive financial and environmental impact due to lowered fuel costs and reduced CO₂ emissions, but at the same time anti-fouling paints present a problem due to the amounts of biocidal compounds (including heavy metals) which are constantly liberated into the oceans.

Fouling is typically settled in the following sequence: Bacteria, algae, hydrozoa/bryozoa, barnacles and other animals.

Fouling is commonly fought using anti-fouling paints/coatings, which release biocidal compounds that are active on the film surface. Biocides are chemical compounds, which are toxic to microbial cells, and thereby prevent the growth of unwanted micro and macro-organisms, whereas the less frequently used biorepellents typically have a relatively low toxicity, and work by repelling or deterring the unwanted biological organisms from submerged installations or areas.

Most anti-fouling compounds are not efficient against all types, why combinations of active compounds become necessary. In traditional anti-fouling paints, the leaching of the active compounds rarely follows the same decay curve. Before the end of its service life, the coating may thus become only partially successful at preventing fouling.

Most antifouling coatings contain cuprous oxide or other copper derivatives as the active biocide that repels weed and molluscs. The cuprous oxide particles are held in suspension in various types of media, from soft ablating paints to hard epoxy resin, and reacts with oxygen in the air to produce cupric ions which repel living molluscs and most organic weed growth (*Yachting Monthly,* February 4, 2016).

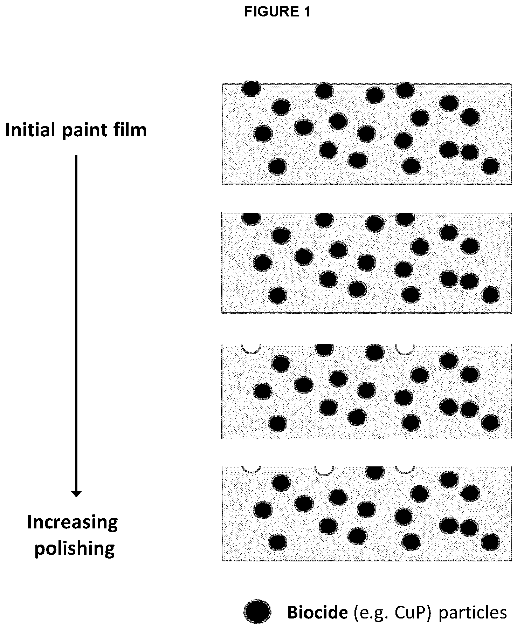

A commonly used anti-fouling copper derivative is copper pyrithione (CuP, see eg Almond KM et al., Ecotoxicology. 2016 Mar;25(2):389-98), which may be included as a solid in anti-fouling paints. In such paints, new CuP-particles (figure 1, black circles) constantly become accessible in the film surface as the paint film is polished by the passage through water. However, large amounts of CuP never get a chance to exert the planned biocidal effect on the film surface because the partially abraded and solubilized CuP particles are washed out of the paint film (figure 1, white half-circles).

Various factors such as chemical degradation and dissipation of the biocides due to washing out from the paint film therefore limits its protective life span, and necessitate re-application of new antifouling paint.

The service life of the protective coating is much shorter than the life of the ship hull, why prolonging the service life of the protective coating has a high value.

Anti-fouling paints are used on both small pleasure boats, large ships, and other submerged marine constructions. Applying a fresh layer of anti-fouling paint to such surfaces typically require the ship etc to be dry docked for cleaning and painting; a process which is laborious and - quite apart from the high material costs - also expensive in labour.

On top of this come the missed earnings for the period where, for example, a container ship is out of operation.

There is therefore a general interest in developing less expensive and labour-intensive anti-fouling procedures. Even a few percent lower costs mean a lot when a large ship needs a new coating of anti-fouling paint. In addition, there is a societal interest in developing anti-fouling procedures which generate less pollution, i.e. where more of the anti-fouling biocide is used for its protective purpose, where less anti-fouling biocide is wasted, not securing any protective purpose.

The release of biocides and/or biorepellents from anti-fouling coatings can be controlled by encapsulating the active compounds, which prolongs their effective lifetime in different matrices by protecting them from leaching and unwanted degradation reactions, and by releasing them slowly. Ideally, an encapsulation method should therefore allow for a high loading of biocide/biorepellant in the encapsulation material with constant release of the active compound from the encapsulation material throughout the service lifetime of the coating. This combination of features ensures a long-lasting anti-fouling effect of the coating, makes best use of the added active compound, and thereby reduces both the cost of goods (CoG) and the negative environmental impact.

The encapsulation concept as such has previously been adressed; see e.g. Jämsä S. et al ("Slow release of a biocidal agent from polymeric microcapsules for preventing biodeterio-ration", Progress in Organic Coatings, Vol 76, Issue 1, January 2013, p 269-276) wherein biocide/biorepellents are trapped inside a water-soluble polymer (such as a polyethyleneimine (PEI)) or a polyacrylate capsule. As another similar approach can be mentioned A Kamtsikakis et al. Bioengineering 2017, 4(4), 81," Encapsulation of Antifouling Organic Biocides in Poly(lactic acid) Nanoparticles" which describes *i.a*. the encapsulation of Irgarol 1051, Econea and Zinc pyrithione (ZPT, ZnP) in biodegradable polymer particles.

These methods achieve the goal of reducing the initial leaching of the biocide/biorepellent as the protective polymer shell must first be at least partially dissolved before the biocide/biorepellent can escape the confinement of the capsule, but this particular encapsulation concept does not address the practical requirements of a paint formulation. A biocide/biorepellent particle surrounded by a thin polymer shell is easily damaged due to the mechanical (shear) forces applied first during mixing into a paint composition, and later during the application of the paint to a surface. Furthermore, the biocide/biorepellent loading in the polymer capsules as described is not sufficiently high.

In contrast to the physically weak polymer microcapsules discussed above, an inert, mechanically robust material like silica is a better choice for encapsulating active compounds to be dispersed into an anti-fouling paint. Silica gel has the advantage that its hydrophilic/hydrophobic properties can be modified to fit a given product type. A more hydrophobic silica gel may for example be preferable as an additive to a solvent based paint composition rather than a water-borne, where a hydrophilic, water-soluble polymer particle may be more difficult to blend in.

The inventors of the present invention have previously developed a method for encapsulation of solid active compounds in silica aerogel particles, which is described in international patent application WO 2009/062975. According to the described procedure, aerogels with a content of encapsulated solid active compounds of about 50% w/w could be achieved on a small scale.

The loading limit of solid active compounds in silica aerogels is of high importance for their eventual use as anti-fouling components in paint compositions. When biocides encapsulated in silica aerogels are added to an anti-fouling paint composition, silica is necessarily added as well in the ratio determined by the loading percentage of the particular aerogel. The inventors have found that anti-fouling paints as a rule of thumb should not contain more than about 1.5% w/w SiO₂ (silica), as the paint otherwise becomes too thick/viscous and difficult to apply evenly on a surface. Therefore, increasing the amount of biocide in an anti-fouling paint cannot be attained just by adding larger amounts of loaded aerogel to the paint compositions because of the 1.5% silica limit. For example:
- An aerogel with a 50% content of biocide contains 50% silica. Such an aerogel can thus at most be added to a paint in 3% w/w of the paint in order to keep below the 1.5% silica limit. This means that the final paint will contain 1.5% w/w biocide. It is not possible to add more biocide by this route without exceeding the 1.5% silica limit.
- An aerogel with 80% w/w biocide contains 20% silica, so up to 7.5% w/w of this aerogel can be added to the paint. A final paint made with this aerogel will contain 80% x 7.5% = 6% w/w biocide, and still not more than 1.5% silica.
- If an aerogel with a 90% biocide loading is used, 15% w/w of the aerogel can be added, achieving a level of 13.5% w/w biocide in the paint without exceeding the 1.5% "silica limit".

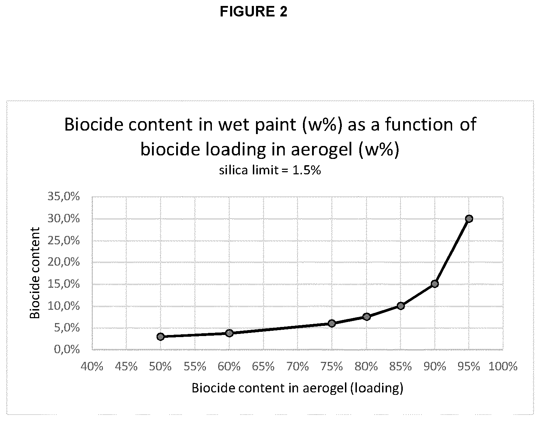

Figure 2 shows the content of biocide in a paint composition (in w-%) as a function of the biocide loading in the aerogel when at most 1.5 % silica may be added to the paint.

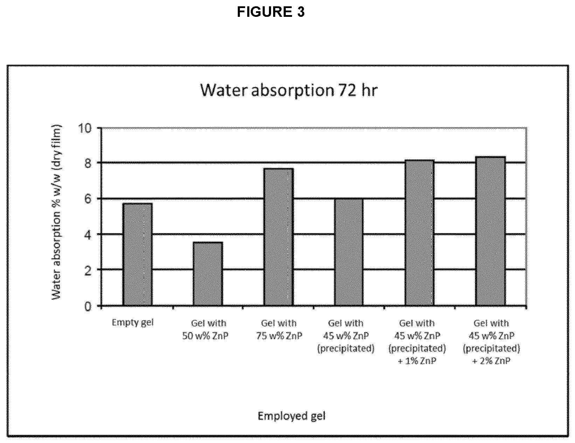

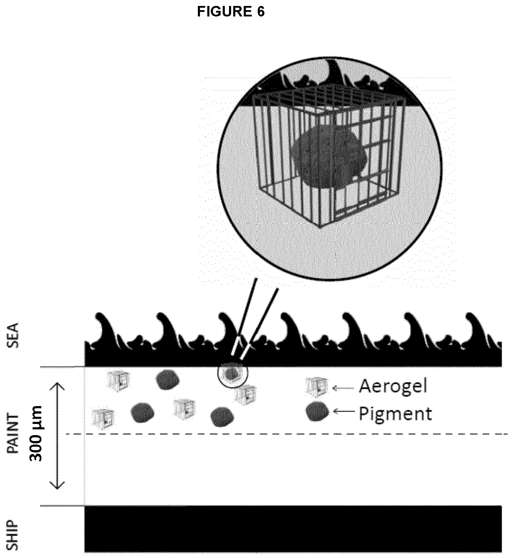

The method described in international patent application WO 2009/062975 was further developed and described in Wallström, E. et al. "A new concept for anti-fouling paint for Yachts" Prog. Org. Coat. 2011, 72, 109-114, in which it was documented that added gel particles contribute to the polishing properties of the anti-fouling paint, as the gel particles are worn down throughout the polishing process. It is also shown that zinc pyrithione is more efficient when it is encapsulated in a gel compared to a situation where it is not. However, this method was later found by the inventors (as described in "Yacht paint with minimised biocide content", Report in Danish from the Danish Ministry of Environment, Environmental Project no. 1663, 2015, referred to in the following as "the Danish 2015 report") not to be readily applicable for encapsulating higher loadings of solid active compounds than about 50-55% w/w. Aerogels described as having a content of 50% and 75% w/w Zinc Pyrithione (ZnP), respectively, were prepared by the method described in WO 2009/062975 and subsequently added to antifouling paints and applied to surfaces for testing of water absorption. The results were shown in Figure 6.3 of the Danish 2015 report, which has been included herein as Figure 3. The paint containing the "75% ZnP aerogel" (figure 3, column 3 from the left) was found to have a roughly 100% higher water absorption (app 8%) in the dry paint film than the paint containing the "50% ZnP aerogel" (figure 3, column 2 from the left) after 72 hours' immersion in artificial seawater. This value was deemed far too high due to the risk of eventual blistering of the coating, especially in fresh or brackish water which is known to lead to an even higher water absorption than sea water having a higher salinity. The paint containing the "75% ZnP aerogel" behaved almost as poorly as paints where ZnP had just been added as a solid to the paint composition.

It was further realized by comparing the theoretical bulk density of the product with the actual value found (see the Methods characterization section herein), that the "75% ZnP aerogel" was not homogeneous. It is therefore likely that the product referred to as a "75% ZnP aerogel" in the Danish report from 2015 in fact had a different composition, and maybe a lower actual content of entrapped ZnP. The so-called "50% ZnP aerogel" also described in the Danish 2015 report seems better substantiated, which is in line with the previous findings in WO 2009/062975 that aerogels with app 50% loadings can be produced by the method described in said reference.

This indicates that the method described in WO 2009/062975 was not able to afford a well-defined loaded aerogel with loadings above app. 50% w/w.

There thus remains a need for biocides and biorepellents in encapsulated form with:
- a high loading of active compounds, preferably above 60%, with high content uniformity,
- a sufficient water absorption in the resulting paint film incorporating the encapsulated biocide, and
- a constant concentration of biocide on the surface of the anti-fouling paint over the entire lifetime of the coating.
for use in marine paints and coatings.

### BRIEF DESCRIPTION OF DRAWINGS

Figure 1 shows an anti-fouling paint wich comprises solid Cu pyrithione (CuP) -particles (figure 1, black circles) which constantly become accessible in the film surface as the paint film is polished by the passage through water. After a while the partially abraded CuP particles are washed out of the paint film (figure 1, white half-circles).
Figure 2 shows the content of biocide in a paint composition (in w-%) which comprises biocide encapsulated in silica aerogel particles as a function of the biocide loading in the aerogel when at most 1,5 % silica may be added to the paint.
Figure 3 is an adapted English version of Figure 6.3 from "Yacht paint with minimised biocide content", Report in Danish from the Danish Ministry of Environment, Environmental Project no. 1663, 2015, referred to herein as "the Danish 2015 report". The figure shows the water absorption after 72 hours immersion in artificial sea water of anti-fouling paints containing aerogels described in the report as having a content of 50% and 75% w/w Zinc Pyrithione (ZnP), respectively. The figure shows that the 75% gel (3^{rd} column from left) leads to an app 8% water absorption, whereas the 50% gel (2^{nd} column from left) leads to a < 4% water absorption.

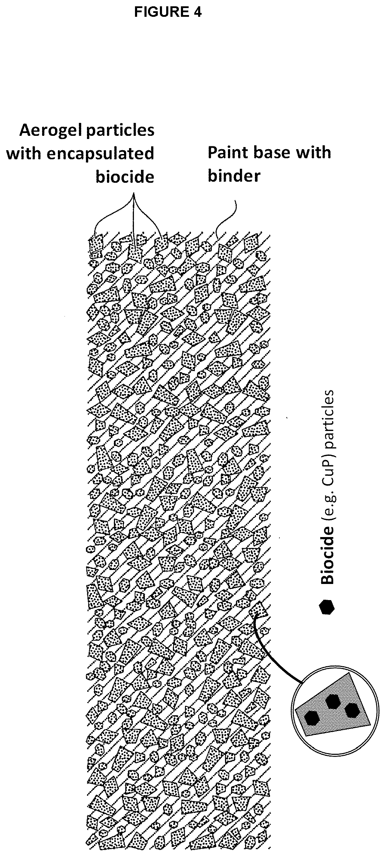

Figure 4 shows a cross section of an anti-fouling paint layer containing aerogel particles which are distributed uniformly in the paint layer. The paint layer is in this case app. 300 µm thick. Each aerogel particle may contain several discrete particles of active compound, and each aerogel particle has a dimension, depending on the fineness of grind, of approximately 10 µm.

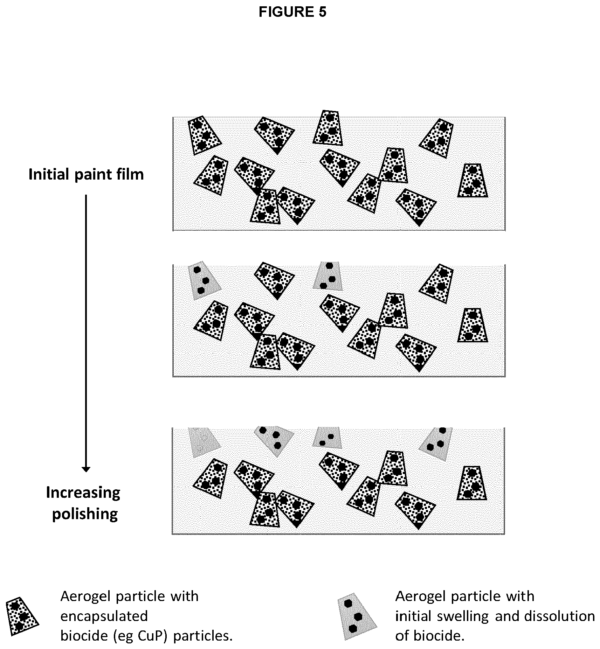

Figure 5 shows a close-up of the anti-fouling paint layer containing aerogel particles shown in figure 4. As the aerogel particles embedded in the outer surface of the paint film are exposed to the aqueous (marine) environment they start absorbing water due to their porous nature and after a while a saturated solution of the active compound is created inside the aerogel particle. Figure 5 also shows that the aerogel particles are not readily washed out of the paint film but remain stuck in the coating and are eventually removed by polishing/abrasion of the coating.
Figure 6 shows another close-up of an anti-fouling paint layer containing pigment particles and cage-like aerogel particles with entrapped biocide. The cage serves to illustrate the function of the aerogel particle: to retain the biocide material in the paint film. The figure also illustrates the thickness of a paint layer (300 µm); for comparison the aerogel particles have a dimension, depending on the fineness of grind, of approximately 10 µm.

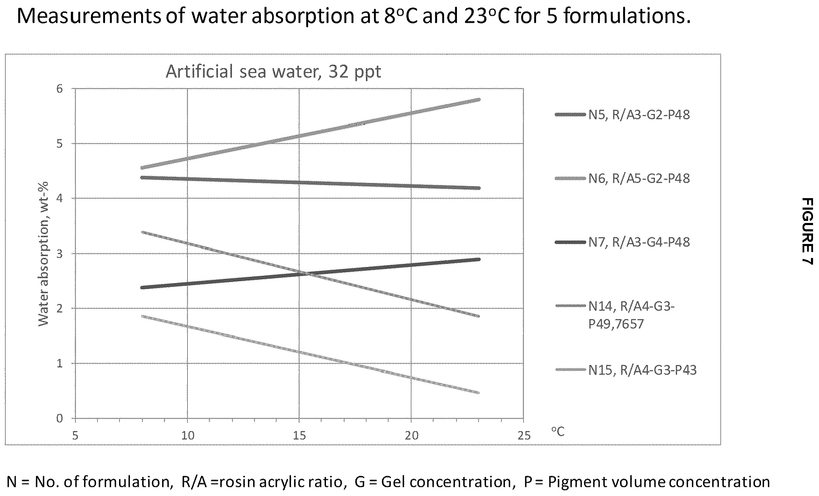

Figure 7 illustrates the water absorption at 8°C and 23°C for 5 anti-fouling formulations at a constant salinity (32 ppt). The loaded aerogel has been kept constant for all formulations, only the amounts of loaded aerogel and other paint composition parameters have been varied. As the figure illustrates, the water absorption of a paint composition can be adjusted radically by changing paint parameters like the R/A (rosin to acrylic) ratio, gel concentration, and Pigment volume concentration.

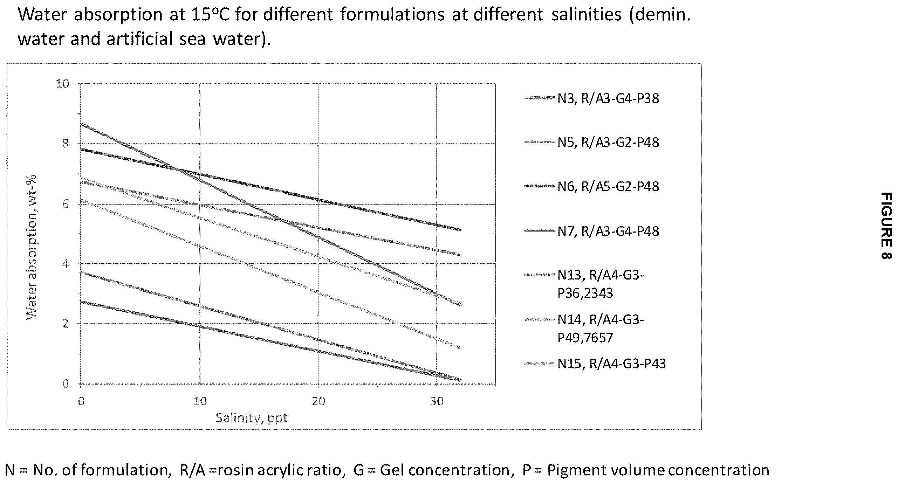

Figure 8 illustrates the water absorption at 15°C for different anti-fouling formulations at different salinities (demin. water and artificial sea water). The loaded aerogel has been kept constant for all formulations, only the amounts of loaded aerogel and other paint composition parameters have been varied. As the figure illustrates, the water absorption of a paint composition can be adjusted radically by changing paint parameters like the R/A (rosin to acrylic) ratio, gel concentration, and Pigment volume concentration.

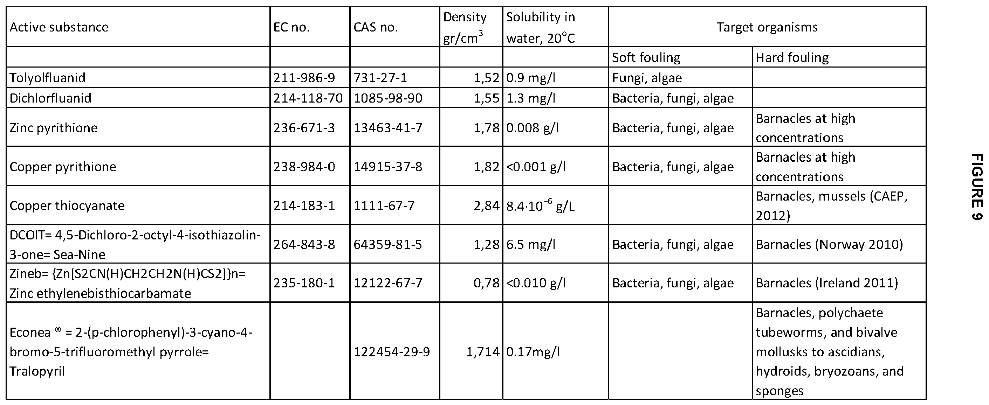

**Figure 9** is a table of preferred biocides and biorepellants according to the present invention.

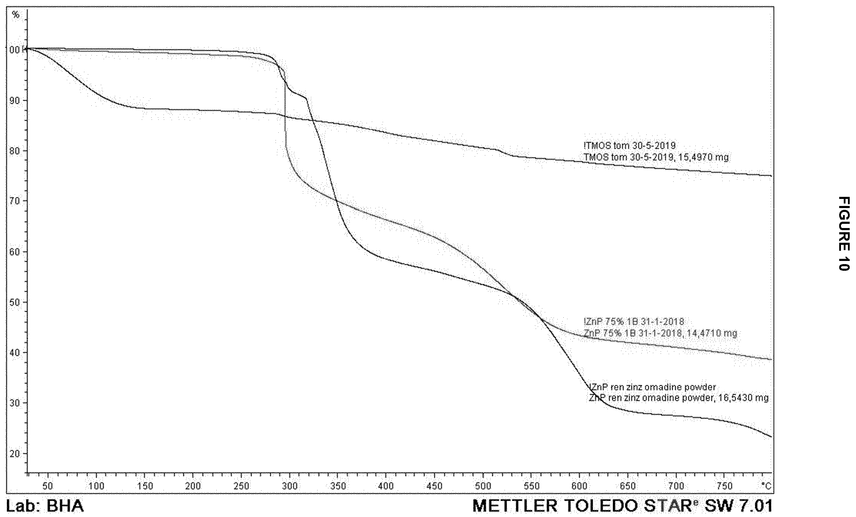

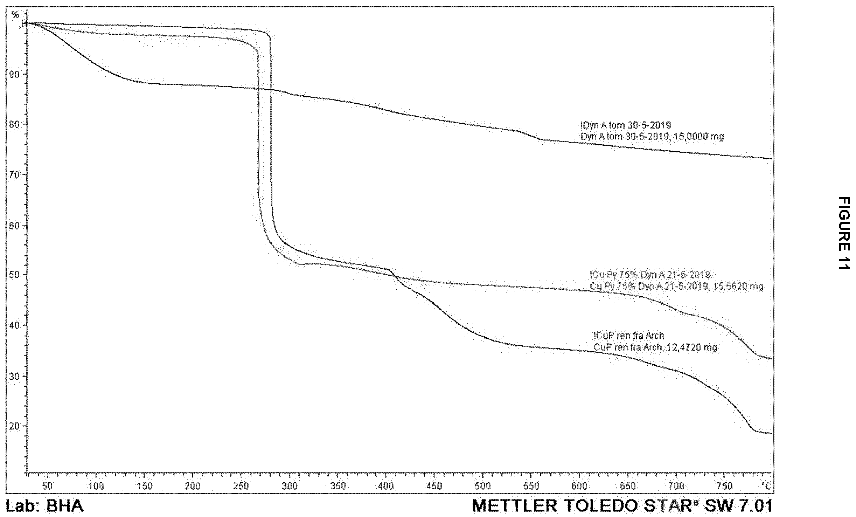

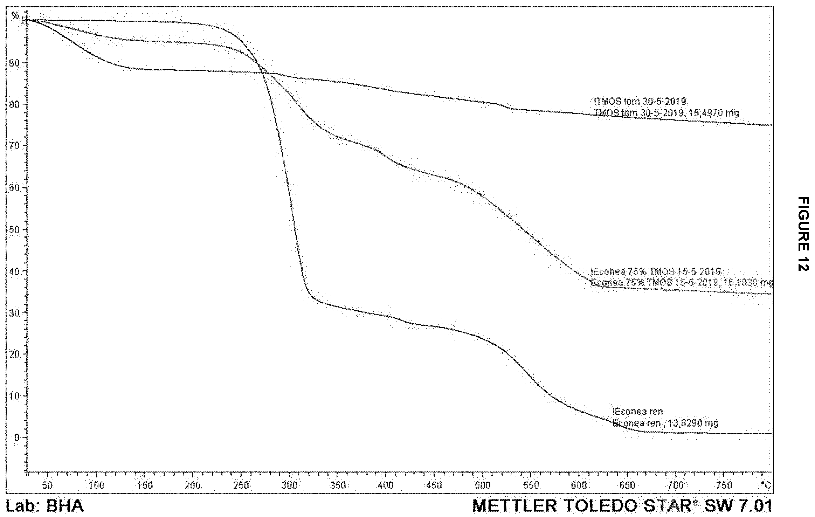

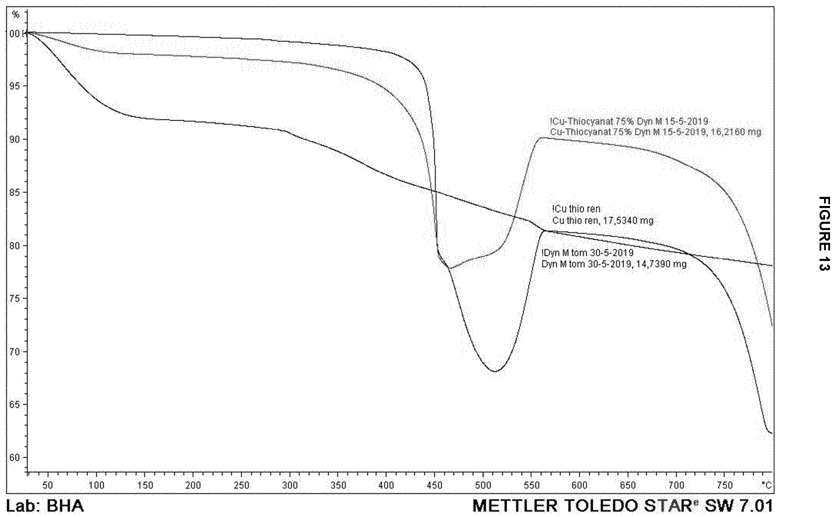

**Figures 10-13** illustrates the TGA (thermogravimetric) analysis of each of four biocides: ZnP (fig.10), CuP (Fig.11), Econea (Fig.12) and Copper thiocyanate (Fig.13). Each figure contains three graphs: The empty aerogel in question, the loaded aerogel and the biocide itself. From these graphs an approximate value for the realised loading can be calculated based on the weight loss of the sample upon heating. It should be noted that the Copper thiocyanate TGA graph in Fig.13 did not allow for calculation of the loading. Apparently Copper thiocyanate (both in pure form and entrapped) undergoes a chemical reaction which results in an abnormal curve.

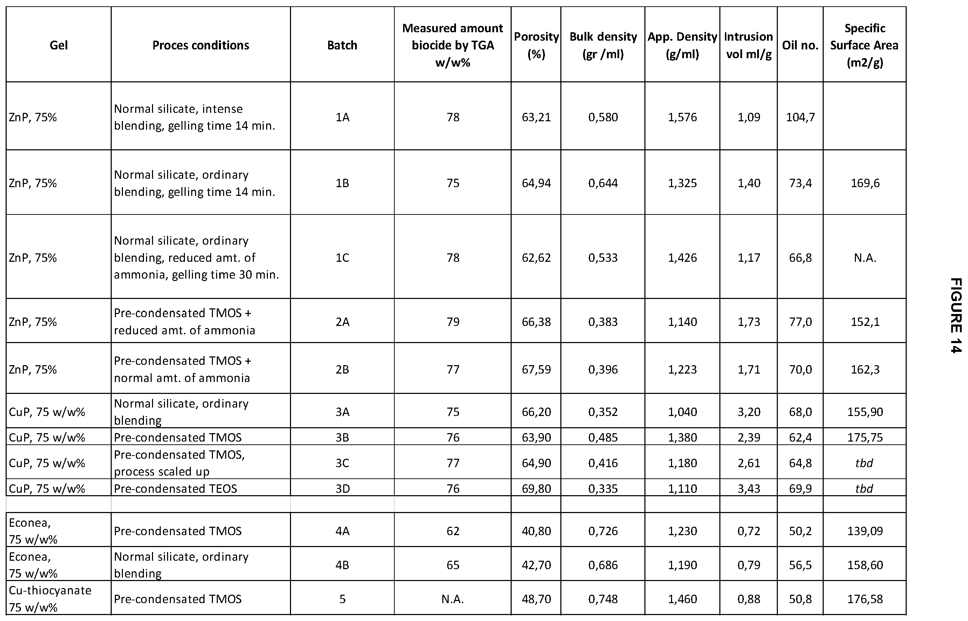

**Figure 14** is a table summarizing the results of Example 10a and 10b

### SUMMARY OF THE INVENTION

The inventors of the present invention have analyzed the behavior of anti-fouling paints, which comprise biocidal and/or biorepellant active compounds encapsulated in aerogel particles under different conditions as regards salinity and sea water temperature, and have firstly discovered that the antifouling effect to a large degree is dependent on correctly managing the water absorption of the paint coating. See figure 7 and figure 8.

The key findings have been:
- Too low water absorption (<1,5 wt-%) leads to fouling and too high water absorption can lead to blistering.
- The relative rosin content in the paint is not decisive for the antifouling effect.
- The paint film water absorption is dependent of the gel concentration as well as the Pigment Volume Concentration (PVC).
It has thus been found important that the anti-fouling coating composition can absorb enough water to maintain a saturated solution of the active compound in the surface layer of the coating, but not so much water as to induce blistering of the coating. It is also clear that the ideal composition for one combination of salinity and water temperature is not necessarily ideal for another combination. However, a value for the water absorption of the paint coating in the range of about 1,5-6% is regarded as optimal.

The inventors have moreover found that to tailor the performance of the anti-fouling coating composition to different combinations of salinity and water temperature, the water absorption of the embedded aerogel particles themselves must be controlled. The two most important influential parameters for this purpose are 1) the loading of active compound in the encapsulating aerogel particle and 2) the porosity of said aerogel particles.

It has therefore been an objective of the present invention to afford antifouling paint compositions for use on marine surfaces, which paint compositions comprise aerogel particles having a high to very high loading (60-95% w/w) of a biocide and/or biorepellant, and have a satisfactory water absorption of the dry paint film, such as in the range of 1,5-6 % w/w.

The present application is a divisional application of European application 19737025.7 which describes a manufacturing procedure for the production of novel aerogel particles and antifouling additives comprising encapsulated biocides and/or biorepellents ("active compounds") having the required mechanical robustness for formulation into paint compositions and a high to very high loading of active compound. Upon formulation in anti-fouling paints, these novel particles lead to a satisfactory water absorption of the dry paint film. These particles have been found to be valuable as additives to anti-fouling paints. The present divisional application focuses on the use of said aerogel particles comprising encapsulated biocides and/or biorepellents in marine paints and coatings and to methods of protecting marine surfaces using said anti-fouling additives and paints.

The manufacturing procedure described in European application 19737025.7 has first been used to improve the production of novel aerogel particles containing high loadings of encapsulated ZnP.

The novel ZnP aerogel particles initially produced were found to have a much improved homogeneity and a different porosity than the particles produced by the procedure described in the present inventors' earlier application WO 2009/062975. This can be measured objectively by mercury intrusion porosimetry and described by for example the intrusion volume or the bulk density for the aerogel particles. These parameters can thus set the novel ZnP-loaded aerogel particles apart from previous aerogels having a similar nominal loading, such as the "75% ZnP aerogel" mentioned in the Danish 2015 report. Specifically, it was found by mercury intrusion porosimetry experiments that ZnP-loaded aerogels prepared with pre-condensated silicates have a significantly lower bulk density and a significantly higher intrusion volume than loaded aerogels produced from normal (monomeric) silicates. Also, the bulk density of the ZnP-loaded aerogels prepared by procedure described in European application 19737025.7 was found to be lower than the bulk density of gel products produced by the procedure described in WO 2009/062975, i.e. products analogous with the "75% ZnP aerogel" mentioned in the Danish 2015 report.

The manufacturing procedure described in European application 19737025.7 has been found to function well for other biocides than ZnP and reliably affords highly loaded (>60% w/w) aerogels.

The low bulk density observed for ZnP-containing aerogel particles seems however not to be a general feature for the encapsulated biocides according to European application 19737025.7 (compare results of Example 10a with Example 10b). Without being bound by theory this may be readily explained since 1) the bulk density of an aerogel loaded with a biocide will be influenced by the density of the biocide itself, and 2) small deviations from ideal process conditions may lead to a slightly collapsed gel-structure, which has a higher density. Therefore, the bulk density of the loaded aerogels as used herein will depend both on the relevant biocide and the entrapment conditions and cannot be used as a descriptive feature of the novel, loaded aerogels. What does set the loaded aerogels of European application 19737025.7 apart from the prior art is primarily or even exclusively the high to very high achievable loading of biocide (>60% w/w), which can be verified, e.g. by thermogravimetric analysis (TGA).
**Accordingly, in a first aspect** the invention therefore provides the use of an antifouling additive comprising
   a. an inorganic, silica-containing aerogel comprising
   b. a porous gel lattice, and
   c. optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
   d. one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
   in marine paints and coatings, wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.
**In a second aspect** the invention provides an antifouling paint composition for use on marine surfaces, comprising a suitable carrier or binder and an antifouling additive comprising
   a. an inorganic, silica-containing aerogel comprising
   b. a porous gel lattice, and
   c. optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
   d. one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
   wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.
**In a third aspect** the invention provides a method for preventing fouling of a marine surface, comprising painting the surface with an antifouling paint composition including an anti-fouling additive comprising
   a. an inorganic, silica-containing aerogel comprising
   b. a porous gel lattice, and
   c. optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
   d. one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
   and a suitable carrier or binder, wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.

### DETAILED DESCRIPTION

As described in the summary of invention, the present application is a divisional application of European application 19737025.7 which describes a manufacturing procedure for the production of novel aerogel particles comprising encapsulated biocides and/or biorepellents ("active compounds") having the required mechanical robustness for formulation into paint compositions and a high to very high loading of active compound. Upon formulation in anti-fouling paints, these particles lead to a satisfactory water absorption of the dry paint film. These particles have been found to be valuable as additives to anti-fouling paints, and the present divisional application thus focuses on the use of said aerogel particles and additives in marine paints and coatings.
**Accordingly, in a first aspect** the invention therefore provides the use of an antifouling additive comprising
   a. an inorganic, silica-containing aerogel comprising
   b. a porous gel lattice, and
   c. optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
   d. one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
   in marine paints and coatings, wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.
**In a second aspect** the invention provides an antifouling paint composition for use on marine surfaces, comprising a suitable carrier or binder and an antifouling additive comprising
   a. an inorganic, silica-containing aerogel comprising
   b. a porous gel lattice, and
   c. optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
   d. one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
   wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.
**In a third aspect** the invention provides a method for preventing fouling of a marine surface, comprising painting the surface with an antifouling paint composition including an anti-fouling additive comprising
   a. an inorganic, silica-containing aerogel comprising
   b. a porous gel lattice, and
   c. optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
   d. one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
   and a suitable carrier or binder, wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.

The limitation involving the bulk density for ZnP-containing aerogels (*"...the bulk density of said aerogel has a value of at most 0.5 gr*/*ml when said aerogel comprises at most 75% by weight Zn pyrithione "*) has been introduced to differentiate these specific embodiments of the present invention, in which the aerogel particles contain zinc pyrithione, from the alleged "75% ZnP aerogel" product mentioned in the Danish 2015 report.

As mentioned above, it has been found by intrusion porosimetry experiments that loaded aerogels containing app. 75% w/w ZnP prepared with pre-condensated silicates have a significantly lower bulk density and a significantly higher intrusion volume than aerogels produced from normal silicates. As can be seen in the experimental section (Example 10a), the average bulk density of an aerogel containing 75% w/w ZnP produced with normal silicates is about 0.58 g/ml (batch 1A-C) whereas the bulk density for similarly loaded aerogels produced with pre-condensated silicates (batch 2A-B) is about 0.39 g/ml, both set of values measured by mercury intrusion porosimetry . The bulk density for an aerogel matching the "75% ZnP aerogel" mentioned in the Danish 2015 report was found to be 0.56 g/ml.

In specific embodiments of the first, second or third aspect of the present invention, the marine surface is the hull or surface of a boat, pleasure yacht or a commercial vessel such as a container ship. In another embodiment the marine surface is a static construction submerged in water.

Using the same manufacturing procedure, the inventors have since produced loaded aerogels with other biocides, e.g. Cu pyrithione (CuP), Econea^{®} (i.e. 4-bromo-2-(4-chlorophenyl)-5-(trifluoromethyl)-1H-pyrrole-3-carbonitrile) and Cu thiocyanate (CuT).

As regards bulk density, the overall results for these loaded aerogels are not as clear as for the Example 10a results, which only covered one biocide (ZnP) at one specific loading (75% w/w). For similarly loaded CuP-aerogels produced by either the new or the old manufacturing process the bulk density was found to be app 0.4 gr/ml, but for Econea and Cu thiocyanate the value was closer to 0.7 mg/ml.

It thus firstly seems that biocide-loaded aerogels according to European application 19737025.7 even at comparable loadings do not as a rule have a low (i.e. at most 0.5 gr/ml) bulk density (compare results of Example 10a with Example 10b). Without being bound by theory this may be explained by the variation of the density of the encapsulated biocides themselves.

Secondly, as discussed in European application 19737025.7, the experimental results (Example 10a + Example 10b) indicate that using pre-condensated silicates do not as a rule afford loaded aerogels with lower bulk density than using monomeric silicates.

In preferred embodiments, the antifouling additive of the first, second or third aspect of the present invention, comprises aerogel particles which comprise at least 65% by weight encapsulated biocides and/or biorepellents ("active compounds"), such as at least 70% by weight, at least 75% by weight, at least 80% by weight, at least 85% by weight, at least 90% by weight or about 95% by weight.

To the best of the inventors' knowledge, aerogels containing such high amounts of encapsulated materials have not previously been disclosed, except potentially from the alleged "75% ZnP aerogel" product mentioned in the Danish 2015 report, which however has a different porosity and homogeneity than the loaded aerogels of European application 19737025.7.

The highly loaded antifouling additives allow for high amounts of biocides and/or biorepellents ("active compounds") to be added to anti-fouling paints, whilst keeping the concomitantly added amount of silica below the 1.5% w/w limit discussed above.

According to the manufacturing procedure described in European application 19737025.7, very high amounts of biocides and/or biorepellents ("active compounds") can be encapsulated *in situ* in an alcogel formed by a two-step procedure using a tetraalkoxysilan (monomeric tetralkylorthosilicate or pre-condensated tetralkylorthosilicate or a combination of a pre-condensated and monomeric tetralkylorthosilicate) in combination with an alkyltrialkoxysilane + the required active compound in the sol-gel preparation, which in a final step is converted to an aerogel and dried.

The resulting aerogel particles typically contain app. 60-85% w/w content of the encapsulated active compound but can be produced with up to app. 90-95% w/w content. By varying the ratio between the three starting materials, different porosities, densities and hydrophobic/hydrophilic behavior of the final aerogel particles can be obtained. Aerogel particles can also by such variations of the method be prepared to match both solvent-based and water-borne paints. Furthermore, the obtained aerogels have bulk densities which are very close to the theoretical values, as discussed in European application 19737025.7.

As used herein, the term "biocidal or biorepellant compounds" is intended to mean an ingredient which has biocidal or biorepellant properties, including, but not limited to active ingredients that are antimicrobial, sporicidal, fungicidal and the like.
The encapsulated active compound is distributed uniformly in the paint layer. Each aerogel particle may contain several discrete particles of active compound (figure 4).

When the anti-fouling paint film is polished either by contact with moving water, or by passage through water, the aerogel particles embedded in the outer surface of the paint film are exposed to the aqueous (e.g. marine) environment, and start absorbing water due to their porous nature. This creates a local aqueous environment inside the exposed aerogel particles around the entrapped active compound particles, which slowly start dissolving. After a while a saturated solution of the active compound is created inside the aerogel particle (Figure 5).

This then serves as a reservoir of active compound, and release to the surface of the anti-fouling coating occurs when the active compound permeates the porous structure of the aerogel particle and out onto the surface of the anti-fouling film coating. In contrast to the situation in figure 1, discussed in the Summary hereinabove, the aerogel particles are not readily washed out of the paint film, but remain stuck in the coating and are eventually removed by polishing/abrasion of the coating. The aerogel particles thereby contribute to the polishing effect of the anti-fouling paint.

As long as there is still undissolved active compound present inside the aerogel particles, thereby ensuring a saturated reservoir of dissolved active compound, release to the surface will take place with substantially zero order kinetics. The release profile over time is in other words substantially linear. The concentration of the biocide/biorepellant on the wetted surface (i.e. when the surface is immersed in water) of the anti-fouling coating is thus kept practically constant during the expected service life of the coating. If more than one biocide/biorepellant is required, each active compound can be individually encapsulated and included in the anti-fouling paint in the correct ratio, thus securing that the individual active compounds do not interact with each other during storage, and that a constant ratio between the released compounds from the final coating is maintained during its expected service life.

In preferred embodiments, the present invention provides anti-fouling paint compositions comprising an amount of antifouling additive which corresponds to 1-4 % w/w biocide for paint compositions suitable for pleasure boats, or to at least 4 % w/w biocide, such as at least 5 % w/w biocide, such as at least 6 % w/w biocide, such as at least 7 % w/w biocide for paint compositions suitable for commercial vessels.

In a further embodiment of the present invention, an anti-fouling paint is provided which comprises two or more different biocides and/or biorepellants, encapsulated individually in different aerogels added to the anti-fouling paint in the required ratio.

The invention further introduces a method to control the water absorption of the anti-fouling coating, which is dependent on the structure and composition of the added aerogel. The water absorption of an anti-fouling coating containing aerogel-encapsulated biocide or biorepellant has a somewhat higher water absorption than the traditional anti-fouling paints. This is caused by the tendency of aerogels to swell when in contact with water.

It has however now been found that apart from allowing for high loadings of active compounds, by changing the ratio of the starting materials for the encapsulating aerogel (ie. the pre-condensated tetraalkoxysilane, the tetraalkoxysilane and the alkyltrialkoxysilane), the swelling of the aerogel particle can be controlled, and thus the water absorption of the coating. This is important, as the water absorption of the anti-fouling coating is dependent on the salinity of the water wherein the coating is submerged: fresh water and brackish water, which both have a low salinity, induce an app. 50% higher water absorption in the coating than sea water having a higher salinity. For use under conditions of low salinity, it is therefore important to choose an aerogel encapsulation with a sufficiently low water absorption and optimize the coating formulation to reduce the salinity sensitivity (see figure 7 and figure 8).

The invention further introduces a method to enhance the polishing effect of anti-fouling coatings in comparison with traditional anti-fouling compositions.

Polishing (i.e. abrasion) of the coating surface is a basic property of an anti-fouling paint/coating which is typically dependent on the binder system, e.g. the content of rosin and self-polishing binders, but also the content of for example cuprous oxide and/or zinc oxide plays a role in this mechanism. The inventors of the present invention have however found that coatings which contain aerogel particles benefit from a further polishing mechanism, as aerogels can swell when they are in contact with water. It has been shown that this swelling effect can introduce a nano-scale surface structure change of the surface of the coating, which has an enhancing impact on the polishing effect. Initial data suggests that this structure seems to reduce barnacle settlement, even in the absence of biorepellents or biocides.
In a preferred embodiment the encapsulated biocidal or biorepellant compound is selected from Zinc pyrithione or Copper pyrithione.
In another specific embodiment the biocidal or biorepellant compound is 4,5-Dichloro-2-oc-tylisothiazol-3(2H)-one (DCOIT, Sea-Nine).
In specific embodiments the biocidal or biorepellant compound is selected from Dichloro-N-[(dimethylamino)-sulphonyl]-fluoro-N-(p-tolyl)-methanesulphenamide (Tolylfluanid) and N-(Dichlorofluoromethylthio)-N',N'-dimethyl-N-phenylsulfamide (Dichlofluanid).
In yet another embodiment the encapsulated biocidal or biorepellant compound is copper thiocyanate .

In particularly preferred embodiments, the encapsulated biocidal or biorepellant compound is selected from zinc pyrithione, copper pyrithione, copper thiocyanate, Tolyolfluanid, Dichlorfluanid, DCOIT/Sea-Nine, Zineb= {Zn[S₂CN(H)CH₂CH₂N(H)CS₂]}ₙ= Zinc ethylenebisthiocarbamate and Econea^{®}= 2-(p-chlorophenyl)-3-cyano-4-bromo-5-trifluoromethyl pyrrole (Tralopyril).

### EXPERIMENTAL

### Materials used in the aerogel syntheses.

Gel forming materials are selected from metal oxides based on Si, Ti, Fe and Al such as tetramethylorthosilicate (TMOS, tetramethoxysilane) or tetraethylorthosilicate (TEOS, tetraethoxysilane). To make a more hydrophobic material methyltrimethoxysilane (MTMS) can be included. Pre-polymerised (pre-hydrolysed, precondensated) tetraalkoxysilanes are either commercially available or can be produced by hydrolysis of the relevant tetraalkoxysilane under weakly acidic conditions followed by polymerization at low temperature overnight.

### Example 1. Preparing an aerogel with app. 40% encapsulated active compound (CuP) (reference example).

1. 6.9 g TMOS (Tetramethyl orthosilicate 98% from Aldrich), 3.2 g MTMS (methyltrimethoxysilane) and 40 g Ethanol was mixed on a magnetic stirrer in an Erlenmeyer flask for 15 minutes.
2. 3.5 g Copper pyrithione was added slowly to 1) during mixing. The solution was mixed for additionally 15 minutes.
3. 200 ml of ammonia solution (25%) was added dropwise to 2) during mixing at full speed (1500 RPM) on the magnetic stirrer. After additionally 2 minutes of mixing, the white opaque solution was transferred into a bluecap bottle. After approx. ½ hour, the gelation took place and the obtained gel was aged in methanol, for at least 24 hours at room temperature, before drying.
4. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 8 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was aprox. 8,5 g.

### 1a. Preparing an aerogel with app. 75% encapsulated biocide (ZnP).

1. Solution 1: 0.64 kg TMOS (Tetramethyl orthosilicate 98% from Aldrich), 0.32 kg MTMS (methyltrimethoxysilane), 3.2 kg Ethanol and 1,44 kg Zinc pyrrithione was mixed in a 10-Itr vessel and agitated vigorously with a paddle mixer.
2. Solution 2: 0.64 kg Ethanol, 0.32 kg Water and 10 ml of ammonia solution (concentrated) is mixed.
3. Solution 2 is added to solution 1 at identical mixing conditions as in (1) for 20-25 minutes at 125 rpm. Mixing speed is reduced until signs of gelling takes approx. 15 minutes (100 rpm). The gelling time is 30 minutes.
4. The gel is stored in plastic containers for 4-5 days after which it is transferred to the extractor(s).
5. The wet gel from 3) was cut into smaller pieces and transferred under ethanol to a 5 or 10 L pressure vessel (flow reactor, equipped with heating jacket and metal frits in both ends). There the gel was flowed with ½ L of ethanol at 0.5 mL/min. Then the temperature in the heating jacket was raised to 40°C and the pressure raised to 110-115 bars, at a rate of 3 bars/min. For 7-8 hours at 40°C and 110 bars, until the recovery of ethanol is 1 ml/minute. CO2 was flowed through the vessel at a rate of approximately 6 mL/min measured at 10°C. After flowing the pressure was slowly released during several hours. The weight of the supercritical dried aerogel was approximately 1,9 kg.

### Example 2. Preparing an aerogel with app. 40% encapsulated CuP from pre-condensated TMOS (reference example).

1. 10.5 g pre-condensated TMOS and 5.2 g MTMS was stirred on a magnetic stirrer in an Erlenmeyer flask for 15 minutes.
2. 4,0 g Copper pyrithione was added slowly to 1) during mixing. The solution was mixed for additionally 15 minutes.
3. 300 ml of ammonia solution (25%) was added dropwise to 2) during mixing at full speed (1500 RPM) on the magnetic stirrer. After additionally 2 minutes of mixing, the white opaque solution was transferred into a bluecap bottle. After approx. 45 minutes, the gelation took place and the obtained gel was aged in methanol, for 24 hours at room temperature, before drying.
4. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 8 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was approx. 11 g.

### Example 2a. Preparing an aerogel with app 80% encapsulated biocide (CuP).

1. Solution 1: 0.64 kg TMOS (Tetramethyl orthosilicate 98% from Aldrich), 0.32 kg MTMS (methyltrimethoxysilane), 3.2 kg Ethanol and 1,77 kg Copper pyrithione was mixed in a 10-Itr vessel and agitated vigorously with a paddle mixer.
2. Solution 2: 0.64 kg Ethanol, 0.32 kg Water and 10 ml of ammonia solution (concentrated) iis mixed.
3. Solution 2 is added to solution 1 at identical mixing conditions as in (1) for 20-25 minutes at 125 rpm. Mixing speed is reduced until signs of gelling takes approx. 15 minutes (100 rpm). The gelling time is 30 minutes.
4. The gel is stored in plastic containers for 4-5 days after which it is transferred to the extractor(s).

The wet gel from 3) was cut into smaller pieces and transferred under ethanol to a 5 or 10 L pressure vessel (flow reactor, equipped with heating jacket and metal frits in both ends). There the gel was flowed with ½ L of ethanol at 0.5 mL/min. Then the temperature in the heating jacket was raised to 40°C and the pressure raised to 110-115 bars, at a rate of 3 bars/min. For 7-8 hours at 40°C and 110 bars, until the recovery of ethanol is 1 ml/minute. CO2 was flowed through the vessel at a rate of approximately 6 mL/min measured at 10°C. After flowing the pressure was slowly released during several hours. The weight of the supercritical dried aerogel was approximately 2.2 kg.

The aim of this experiment was to encapsulate 80 w/w% CuP. Based on the inventors' experience that normally app.55% by weight of the loaded aerogel originates from the employed monomeric/normal silicates as starting materials, the 2.2 kg contains app. 55% of 960 gr = 480 gr silicates and thus app. 76% CuP.

### Example 2b. Preparing an aerogel with app. 75% encapsulated ZnP from pre-condensated TMOS.

1. 17,5 g pre-condensated TMOS (Dynasylan M 39%) 3,2 g MTMS and 60 g Ethanol (minimum) was stirred on a magnetic stirrer in an Erlenmeyer flask for 15 minutes.
2. 30,0 g Zinc pyrithione was added slowly to 1) during mixing. The solution was mixed for additionally 15 minutes.
3. 2 g of ammonia solution (25%) was added dropwise to 2) during mixing at full speed (1500 RPM) on the magnetic stirrer. After additionally 2 minutes of mixing, the white opaque solution was transferred into a bluecap bottle. After approx. 30 minutes, the gelation took place and the obtained gel was aged in methanol, for 24 hours at room temperature, before drying. The amount of ammonia solution can be reduced to 1 g if the gel time should be prolonged.
4. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 8 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was approximately 40 g.

### Example 3. Preparing an aerogel with app. 75% encapsulated biorepellent (ZnP) (reference example).

1. 6.7 g TMOS (Tetramethyl orthosilicate 98% from Aldrich), 3.3 g MTMS and 40 g Ethanol was mixed on a magnetic stirrer in an Erlenmeyer flask for 15 minutes.
2. 20 g Zinc pyrithione was added slowly to 1) during mixing. The solution was mixed for additionally 15 minutes.
3. 200 ml of ammonia solution (25%) was added dropwise to 2) during mixing at full speed (1500 RPM) on the magnetic stirrer. After additionally 2 minutes of mixing, the white opaque solution was transferred into a bluecap bottle. After approx. ½ hour, the gelation took place and the obtained gel was aged in methanol, for at least 24 hours at room temperature, before drying.
4. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 8 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was approx. 25-27 g.

### Example 4. Preparing an aerogel with app. 80% encapsulated ZnP from pre-condensated TMOS (reference example).

1. 10,5 g pre-condensated TMOS and 5,2 g MTMS was stirred on a magnetic stirrer in a Erlenmeyer flask for 15 minutes.
2. 30,0 g Zinc pyrithione was added slowly to 1) during mixing. The solution was mixed for additionally 15 minutes.
3. 300 ml of ammonia solution (25%) was added dropwise to 2) during mixing at full speed (1500 RPM) on the magnetic stirrer. After additionally 2 minutes of mixing, the white opaque solution was transferred into a bluecap bottle. After approx. 45 minutes, the gelation took place and the obtained gel was aged in methanol, for 24 hours at room temperature, before drying.
4. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 8 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was 37.5 g.

The aim of this experiment was to encapsulate 80 w/w% ZnP. Based on the inventors' experience that normally 45-50% by weight of the loaded aerogel originates from the employed precondensated materials as starting materials, the 37.5 gr contains app. 50% of 15.7 gr = 7.35 gr silicates and thus app. 80% Zinc pyrithione, which is in good agreement with TGA measurements (fig.14).

### Example 5. Preparing an aerogel with app. 80% encapsulated CuP from pre-condensated TMOS.

1. A mixture of 17,5 g pre-condensated TMOS (Dynasylan M 39%), 3.2 g MTMS and 60 g Ethanol (minimum) was stirred on a magnetic stirrer in an Erlenmeyer flask for 15 minutes.
2. 40.0 g Copper pyrithione was added slowly to 1) during mixing. The solution was mixed for additionally 15 minutes.
3. 2 g of ammonia solution (25%) was added dropwise to 2) during mixing at full speed (1500 RPM) on the magnetic stirrer. After additionally 2 minutes of mixing, the white opaque solution was transferred into a bluecap bottle. After approx. 30 minutes, the gelation took place and the obtained gel was aged in methanol (or ethanol), for 24 hours at room temperature, before drying. The amount of ammonia solution can be reduced to 1 g if the gel time should be prolonged.

The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 8 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was approximately 55 g.

The aim of this experiment was to encapsulate 80 w/w% CuP. Based on the inventors' experience that normally 45-50% by weight of the loaded aerogel originates from the employed precondensated materials as starting materials, the 55 gr contains app. 50% of 20.7 gr = 10.35 gr silicates and thus app. 81% Copper pyrithione, which is in good agreement with TGA measurements (fig.14).

### Example 6. Preparing an aerogel with encapsulated biocide from pre-condensated TMOS/TEOS.

1. A mixture of 10.5 g pre-condensated TMOS or TEOS and 5.2 g MTMS is stirred on a magnetic stirrer in an Erlenmeyer flask for 15 minutes.
2. 10 g Diuron was added slowly to 1) during mixing. The solution was mixed for additionally 15 minutes.
3. 2 ml of ammonia solution (25%) was added dropwise to 2) during mixing at full speed (1500 RPM) on the magnetic stirrer. After additionally 2 minutes of mixing, the white opaque solution was transferred to a bluecap bottle. After approx. ½ hour, the gelation took place and the obtained gel was aged in methanol for 24 hours at room temperature, before drying.
4. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 8 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was app. 18 g.

### Example 7a. Preparing an aerogel with app. 75% encapsulated Econea from TMOS.

4. A mixture of 14 g TMOS, 7 g MTMS and 60 g Ethanol (minimum) (a higher alcohol can be used) was stirred on a magnetic stirrer in an Erlenmeyer flask for 15 minutes.
5. 36.0 g Econea was added slowly to 1) during mixing. The solution was mixed for additionally 15 minutes.
6. 1,9 g of ammonia solution (25%) and 2 g of water, was added dropwise to 2) during mixing at full speed (1500 RPM) on the magnetic stirrer. After additionally 2 minutes of mixing, the white opaque solution was transferred into a bluecap bottle. After approx. 180 minutes, the gelation took place and the obtained gel was aged in ethanol, for 48 hours at room temperature, before drying. The amount of ammonia solution can be reduced to 1 g to prolong the gelling time.
7. The wet gel from 3) was cut into smaller pieces and transferred under ethanol (or a higher alcohol) to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For 4 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was approximately 28 g.

### Example 7b. Preparing an aerogel with app. 75% encapsulated Econea from pre-condensated TMOS.

1. A mixture of 17,5 g precondensated TMOS, 3,2 g MTMS and 60 g Ethanol (minimum) (a higher alcohol can be used) was stirred on a magnetic stirrer in an Erlenmeyer flask for 15 minutes.
2. 30.0 g Econea was added slowly to 1) during mixing. The solution was mixed for additionally 15 minutes.
3. 2 g of ammonia solution (25%), was added dropwise to 2) during mixing at full speed (1500 RPM) on the magnetic stirrer. After additionally 2 minutes of mixing, the white opaque solution was transferred into a bluecap bottle. After the gelation had taken place the obtained gel was aged in ethanol, for 48 hours at room temperature, before drying. The amount of ammonia can be reduced to 1 g to prolong the gel time.
4. The wet gel from 3) was cut into smaller pieces and transferred under ethanol (or a higher alcohol) to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 90 bars, at a rate of 3 bars/min. For 4 hours at 35°C and 90 bars, 2½ kg of CO2 was flowed through the vessel at a rate of approximately 6 mL/min measured at 10°C. After flowing the pressure was slowly released during several hours. The weight of the supercritical dried aerogel was approximately 33 g.

The aim of this experiment was was to encapsulate 75 w/w% Econea. Based on the inventors' experience that normally 45-50% by weight of the loaded aerogel originates from the employed precondensated materials as starting materials, the 33 gr contains app. 50% of 20.7 gr = 10.35 gr silicates and thus app. 68% Econea, which is in good agreement with TGA measurements (fig.14). The lower than expected content of Econea is believed to be caused by extraction from the loaded gel by ethanol during the drying procedure.

### Example 7c. Preparing an aerogel with encapsulated Copper thiocyanate from pre-condensated TMOS/TEOS.

5. A mixture of 14 g pre-condensated TMOS (or pre-condensated TEOS) and 7 g MTMS was stirred on a magnetic stirrer in a Erlenmeyer flask for 15 minutes.
6. 36 g Copperthiocyanate was added slowly to 1) during mixing. The solution was mixed for additionally 15 minutes.
7. 1 ml of ammonia solution (25%) and 2 g of water, was added dropwise to 2) during mixing at full speed (1500 RPM) on the magnetic stirrer. After additionally 2 minutes of mixing, the white opaque solution was transferred to a bluecap bottle. After approx. ½ hour, the gelation took place and the obtained gel was aged in ethanol for 48 hours at room temperature, before drying.
8. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 110 bars, at a rate of 3 bars/min. For approx. 4 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was approximately 46 g.

The aim of this experiment was to encapsulate 75 w/w% of Copperthiocyanate. Based on the inventors' experience that normally 45-50% by weight of the loaded aerogel originates from the employed precondensated materials as starting materials, the 46 gr contains 45-50% of 21gr = app.10 gr silicates and thus app. 78% Copper thiocyanate. This has not been possible to verify by TGA due to an abnormal TGA run (see fig.13 and fig.14).

### Example 7d. Preparing an aerogel with encapsulated Zineb from pre-condensated TMOS/TEOS.

1. 17,5 g pre-condensated TMOS (Dynasylan M 39%), 3,2 g MTMS and 60 g Ethanol (minimum) was stirred on a magnetic stirrer in an Erlenmeyer flask for 15 minutes.
2. 13 g Zineb (Zinc ethylenebisthiocarbamate) was added slowly to 1) during mixing. The solution was mixed for additionally 15 minutes.
3. 2 ml of ammonia solution (25%) was added dropwise to 2) during mixing at full speed (1500 RPM) on the magnetic stirrer. After additionally 2 minutes of mixing, the white opaque solution was transferred to a bluecap bottle. After the gelation took place the obtained gel was aged in ethanol for 48 hours at room temperature, before drying.
4. The wet gel from 3) was cut into smaller pieces and transferred under ethanol to a ½ L pressure vessel (½ L flow reactor, equipped with heating jacket and metal frits in both ends). There the gel was flowed with ½ L of ethanol at 0.5 mL/min. Then the temperature in the heating jacket was raised to 40°C and the pressure raised to 90-110 bars, at a rate of 3 bars/min. For 4 hours at 40°C and 110 bars, 2½ kg of CO2 was flowed through the vessel at a rate of approximately 6 mL/min measured at 10°C. After flowing the pressure was slowly released during several hours. The weight of the supercritical dried aerogel was app. 25 g.

The aim of this experiment was to encapsulate 60 w/w% of Zinc ethylenebisthiocarbamate (Zineb). Based on the inventors' experience that normally 45-50% by weight of the loaded aerogel originates from the employed precondensated materials as starting materials, the 25 gr contains 45-50% of 20.7gr = app.10 gr silicates and thus app. 60% Zineb.

### Example 8. Measured gel properties

Before measuring any gel data the material has been grinded down to a medium particle size of approx. 10 µm. Below the results for a few examples are given. It should be noticed that as expected the pore volume is lower for aerogels with encapsulated active compound than for the "unloaded" gel, but there is no significant difference in pore volume between the gels with encapsulated active compound from example 1 and 2. There is however a difference in oil number, where the oil number decreases when the active compound is included, which probably will have an influence on the interaction between the binder system and the gel. It should be expected that the amount of active compound as well as the type will have an influence on the result. The oil absorption test also reveals that the encapsulation made with pre-condensated alcoxide leads to an aerogel with different physical properties than if made with monomeric alcoxide: gels made with pre-condensated alcoxide require approximately 20% less oil for saturation.

| **Gel number** | **Pore volume cm³/g** | **Oil number** | **Gr oil/cm³ for saturation** |
|---|---|---|---|
| Empty gel, according to Ex.1 | 4,75 | 434 | 0,91 |
| Encapsulated CuP according to Ex.1 | 2,75 | 247 | 0,90 |
| Empty gel, according to Ex.2 | 4,64 | 332 | 0,72 |
| Encapsulated CuP according to Ex.2 | 2,57 | 187 | 0,73 |

### Example 9. Water absorption for two identical paints, except for choice of gel:

The first paint (A) includes the encapsulated gel from example 1 of European application 19737025.7. The second paint (B) includes the gel from example 2. The paints were dispersed until the particle size measured on a Hegman Bar was beneath 10 µm. The paints were allowed to settle for 7 days before application on the test surface.

The prototype paints produced have been applied on Amino-silane treated preparation glass, where the test area is kept constant, with a dry paint film of approximate 100 µm thickness. Each glass plate is weighed before application of paint and after a minimum of 2 days of drying at 23 °C and 50 %RH. An artificial seawater solution was used for the experiments. The artificial seawater mix gives a salinity of 31-35 ppt, and a pH between 7,8-8,2. The test is typically started in the beginning of a week and the weight is registered until equilibrium or a clear tendency can be seen. This test was made in duplicate. Furthermore, a single preparation glass of each type was also exposed to demineralised water. All exposures were made at 23 °C. The results show that the encapsulated active compound from example 2 gives a significant lower water absorption in the final dry paint film, see the table below. It can also be seen that the water quality has a clear influence on the result.

| Paint | Weight increase after 96 hours, seawater (duplicate) | Weight increase after 96 hours, demineralised water (single test) |
|---|---|---|
| A (gel ex.1) | 3,5 % | 8 % |
| B (gel ex.2) | 1,6 % | 5 % |

These results can be compared with the results from 2015 shown in the Danish 2015 report discussed hereinabove, see also figure 3. It was concluded in the Danish 2015 report that the "75% ZnP aerogel" gave rise to an unacceptably high water absorption in the dry anti-fouling paint film (around 8%) after 72 hours immersion in artificial sea water.

In the present test two anti-fouling paints, identical except for the added aerogel (i.e. gels from Experiment 1 and 2), have been tested for even longer (96 hours), and it was concluded that the water absorption in the dry paint was significantly lower in paint B which contained the aerogel produced in example 2, ie with pre-condensated silicates, than in paint A which contained the aerogel produced in example 1, i.e. with normal silicates.

These results also shows that there is a difference in the obtained product (the loaded aerogel) which can only be attributed to the process of its manufacture.

### Example 10. Anti-fouling paint example containing an aerogel with encapsulated biocide Background:

A gel is a porous structure and when the material is grinded it is important to make sure that the gel is wetted by the binder system. This can be achieved by using a pre-dispersion step where the gel is introduced to the binder and the mixture is grinded. Without a pre-dispersion the inventors have found that the need for a dispersion agent increases, probably because the dispersion agent seeks to wet all surfaces, also inside the gel.

The pre-dispersion also has the effect that the water absorption of the dry paint film stabilizes more quickly, than if the paint is grinded in one step.

After the pre-dispersion all raw materials are mixed into the paint and the paint is grinded down to approximately 10-20 µm.

It has been found that both temperature and salinity have a clear influence on the water absorption of the dry coating film, see figure 7 and figure 8. To find out the relationship between different formulation parameters and these climate parameters, it is very important to understand how to formulate an anti-fouling paint that has a reduced sensitivity towards temperature and salinity to be able to optimize the anti-fouling effect of the biocide.

Below a formulation is given which has been used to evaluate the water adsorption of the dry coating.

| Paint example | Amount weight- % interval |
|---|---|
| 1. Rosin in Xylene (50% binder)) | 33-58 |
| 3. Acrylic resin in xylene (40% binder) | 9-19 |
| Gel with 75 % ZnP | 1,6-4,4 |
| Dispersion agent | 0,9-2,3 |
| Iron oxide (red) | 10-23 |
| Barium sulphate | 10-23 |
| Talcum | 1,5-3 |
| Thickener | 0,25-0,6 |

The paints were tested at 8°C and 23°C. Furthermore, artificial sea water as well as demineralized water was used at both temperatures. It was surprisingly found that the water absorption can both increase and decrease when changing the temperature. The salinity had a decreasing effect when increasing the salinity (figure 7 and figure 8)

Evaluating the formulation parameters showed surprisingly that both the gel concentration and the Pigment volume concentration (PVC) are very important parameters. The paint formulation used in the experiments was prepared according to the following procedure:
1. Prepare binder solution 1: Rosin 50 % in xylene. Stir until completely dissolved.
2. Prepare binder solution 2: Acrylic resin 40 % in xylene. Stir until completely dissolved.
3. Mix 36,8 g rosin solution with 2 g gel encapsulated biocide (75% ZnP) according to European application 19737025.7 in a glass container together with glass beads (ø 3 mm; 25g/100g paint formulation). Shake for 15 minutes on a Red Devil shaking machine.
4. Mix in the remaining ingredients:
   a. 8,6 g acrylic binder solution,
   b. 2,3 g dispersion agent,
   c. 23,1 g iron oxide,
   d. 23,1 g Barium sulphate,
   e. 3,5 g Talcum, and
   f. 0,6 g thickener (eg. Luvogel SA1).

Shake on Red Devil 3 x 15 minutes to a fineness of grind of 20 µm. Let the paint rest and mature for 4 days before applying on a substrate.

### Example 10a. Measurements of ZnP-containing aerogels

In the present experiment, 5 different aerogel samples (1A, 1B, 1C, 2A and 2B), all containing 75% ZnP, were tested by mercury intrusion porosimetry for various pore-related parameters. Samples 1A, 1B and 1C were prepared with normal silicates under different process conditions, and samples 2A and 2B with pre-condensated TMOS.

It was found that both the **bulk density** and the **intrusion volume** was highly descriptive when defining the differences between aerogels produced using either normal tetraalkoxysilanes or pre-condensated silicates, see Figure 14.

From the performed experiments in Example 10a it can be concluded that ZnP-containing aerogels prepared with pre-condensated TMOS have a significantly lower bulk density and a significantly higher intrusion volume than similar aerogels produced from normal silicates. On the other hand, the porosity and oil number for the two types of gel do not display a similar trend.

### Example 10b. Measurements of aerogels containing other biocides

In Example 10b, 7 different aerogel samples (3A, 3B, 3C, 3D, 4A, 4B and 5), all planned to contain app. 75% w/w biocide, were tested by mercury intrusion porosimetry for various pore-related parameters. Batch 3A and 4B were prepared with normal silicates under different process conditions, samples 3B, 3C, 4A and 5 were prepared with pre-condensated TMOS and sample 3D with pre-condensated TEOS. The tested biocides were Cu pyrithione, Econea^{®} (Tralopyril CAS [122454-29-9], 4-bromo-2-(4-chlorophenyl)-5-(trifluoromethyl)-1H-pyrrole-3-carbonitrile) and Cu thiocyanate (CuT).

In contrast to the results of Example 10a hereinabove, the results of Example 10b (see Figure 14 which also contains the results from Example 10a) do not suggest that aerogels prepared with pre-condensated silicates have a significantly lower bulk density and a significantly higher intrusion volume than aerogels produced from normal silicates when prepared with the biocides mentioned above (Cu pyrithione, Econea^{®} and Cu thiocyanate).

For all samples the content of encapsulated biocide was evaluated by thermogravimetric (TGA) measurements. For **ZnP and CuP** there was a good agreement between the amount biocide planned to be entrapped in the aerogel and the amount actually present in the aerogel when measured by TGA (77% and 76% respectively vs. 75% planned for). For **Econea** a gel with a higher than expected bulk density (app. 0.70 gr/ml) and lower than expected biocide content (app. 64% w/w) was achieved. Without being bound by theory, the inventors believe this is due to the solubility of Econea in ethanol. During the supercritical drying of the loaded gel, the gel is flowed with ethanol under a high pressure which is believed to extract some of the Econea, simultaneously causing the gel structure to partially collapse which leads to an increased bulk density and lower than expected content of Econea, as observed. This problem has subsequently been found to be remediable by lowering the pressure during the ethanol flowing procedure to about 80 bar. For **Copper thiocyanate,** experiment 7c afforded a loaded aerogel with the expected biocide content (app. 78% w/w), but the thermogravimetric analysis of the neat biocide and the loaded aerogel (see figure 13) suggests that a chemical reaction, possibly with oxygen, takes place during the heating of the sample which makes it impossible to calculate the weight loss. Thus the content of app. 75% w/w could not be verified by TGA. It may be possible to re-run the TGA analysis under an inert atmosphere.

### Maritime anti-fouling paint

The water absorption of the paint film is a critical parameter connected to leaching layer, leaching of the active compound, polishing rate and thus anti-fouling properties. Water absorption is influenced by the choice of pigmentation, the chosen gel and the amount of gel. The aerogels are very porous and an equilibrium between the different components has to be achieved before valid measurements can be performed. It has been shown that the binder system penetrates the aerogel, which reduces the water absorption until the equilibrium between the components is attained, and also assures that the aerogel particles are securely fastened in the paint layer and not washed out over time by exposure to water. It is assumed that gels with high intrusion volume values (as measured by mercury poromesitry) can easier be penetrated by the binder system. In sea water the gel will be hydrolysed over time and thus contribute to the polishing properties of the paint film.

## Claims

1. Use of an antifouling additive comprising
a) an inorganic, silica-containing aerogel comprising
b) a porous gel lattice, and
c) optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
d) one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
in marine paints and coatings, wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.

2. The use of an antifouling additive according to claim 1, wherein said additive comprises at least 75% by weight of the one or more biocidal or biorepellant compounds, such as at least 80% or such as at least 85%.

3. The use of an antifouling additive according to any one of claim 1-2, wherein the biocidal or biorepellant compound is selected from Copper pyrithione or Zinc Pyrithione.

4. An antifouling paint composition for use on marine surfaces, comprising a suitable carrier or binder and an antifouling additive comprising
a) an inorganic, silica-containing aerogel comprising
b) a porous gel lattice, and
c) optionally an alcoxide comprising Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb or Lu, and
d) one or more biocidal or biorepellant compounds selected from Zinc pyrithione, Copper pyrithione, Copper thiocyanate, Tolyolfluanid, Dichlorfluanid, DCOIT/Sea-Nine, Zineb= {Zn[S2CN(H)CH2CH2N(H)CS2]}n= Zinc ethylenebisthiocarbamate and Econea^{®}= 2-(p-chlorophenyl)-3-cyano-4-bromo-5-trifluoromethyl pyrrole (Tralopyril) entrapped in said aerogel,
wherein said silica-containing aerogel comprises at least 60% by weight of the one or more biocidal or biorepellant compounds, and wherein the entrapment of said one or more biocidal or biorepellant compounds takes place during the SOL-GEL formation of the gel, and wherein the bulk density of said aerogel has a value of at most 0.5 gr/ml when said aerogel comprises at most 75% by weight Zn pyrithione.

5. An antifouling paint composition for use on marine surfaces according to claim 4 wherein the marine surface is the hull or surface of a boat, pleasure yacht or a commercial vessel such as a container ship, or a static construction submerged in water

6. An antifouling paint composition for use on marine surfaces according to claim 4-5, wherein said antifouling additive comprises at least 75% by weight of the one or more biocidal or biorepellant compounds, such as at least 80% or such as at least 85%.

7. An antifouling paint composition for use on marine surfaces according to any one of claims 4 to 6 wherein said antifouling additive comprises a biocidal or biorepellant compound selected from Copper pyrithione or Zinc Pyrithione.

8. An antifouling paint composition for use on marine surfaces according to any one of claims 4 to 7, comprising an amount of antifouling additive which corresponds to 1-4 % w/w biocide in the dry paint film for paint compositions suitable for boats and pleasure yachts.

9. An antifouling paint composition for use on marine surfaces according to any one of claims 4 to 8, comprising an amount of antifouling additive which corresponds to at least 4 % w/w biocide in the dry paint film for paint compositions suitable for commercial vessels such as a container ship, or the surface of a static construction submerged in water.

10. A method for preventing fouling of a marine surface, comprising painting the surface with an antifouling paint composition according to any one of claims 4-9.

## Patentansprüche

1. Verwendung eines Antifouling-Additivs, umfassend
a) ein anorganisches Siliciumdioxid-enthaltendes Aerogel, umfassend
b) ein poröses Gelgerüst und
c) gegebenenfalls ein Alkoxid, umfassend Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb oder Lu, und
d) eine oder mehrere biozide oder bioabweisende Verbindung(en) ausgewählt aus Zinkpyrithion, Kupferpyrithion, Kupferthiocyanat, Tolyolfluanid, Dichlorfluanid, DCOIT/Sea-Nine, Zineb= {Zn[S2CN(H)CH2CH2N(H)CS2]}n = Zinkethylenbisthiocarbamat und Econea^{®}= 2-(p-Chlorphenyl)-3-cyano-4-brom-5-trifluormethylpyrrol (Tralopyril), die in dem Aerogel eingeschlossen sind, in marinen Farben und Beschichtungen, wobei das Siliciumdioxid-enthaltende Aerogel wenigstens 60 Gew.-% der einen oder mehreren bioziden oder bioabweisenden Verbindung(en) umfasst, und wobei das Einschließen der einen oder mehreren bioziden oder bioabweisenden Verbindung(en) während der SOL-GEL-Bildung des Gels stattfindet, und wobei die Schüttdichte des Aerogels einen Wert von höchstens 0,5 g/ml aufweist, wenn das Aerogel höchstens 75 Gew.-% Zn-Pyrithion umfasst.

2. Antifouling-Additiv nach Anspruch 1, wobei das Additiv wenigstens 75 Gew.-% der einen oder mehreren bioziden oder bioabweisenden Verbindung(en) umfasst, wie wenigstens 80 % oder wie wenigstens 85 %.

3. Verwendung eines Antifouling-Additivs nach einem der Ansprüche 1-2, wobei die biozide oder bioabweisende Verbindung ausgewählt ist aus Kupferpyrithion und Zinkpyrithion.

4. Antifouling-Farbzusammensetzung zur Verwendung auf marinen Oberflächen, umfassend einen geeigneten Träger oder ein geeignetes Bindemittel und ein Antifouling-Additiv, umfassend
a) ein anorganisches Siliciumdioxid-enthaltendes Aerogel, umfassend
b) ein poröses Gelgerüst und
c) gegebenenfalls ein Alkoxid, umfassend Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb oder Lu, und
d) eine oder mehrere biozide oder bioabweisende Verbindung(en) ausgewählt aus Zinkpyrithion, Kupferpyrithion, Kupferthiocyanat, Tolyolfluanid, Dichlorfluanid, DCOIT/Sea-Nine, Zineb= {Zn[S2CN(H)CH2CH2N(H)CS2]}n = Zinkethylenbisthiocarbamat und Econea^{®}= 2-(p-Chlorphenyl)-3-cyano-4-brom-5-trifluormethylpyrrol (Tralopyril), die in dem Aerogel eingeschlossen sind, wobei das Siliciumdioxid-enthaltende Aerogel wenigstens 60 Gew.-% der einen oder mehreren bioziden oder bioabweisenden Verbindung(en) umfasst, und wobei das Einschließen der einen oder mehreren bioziden oder bioabweisenden Verbindung(en) während der SOL-GEL-Bildung des Gels stattfindet, und wobei die Schüttdichte des Aerogels einen Wert von höchstens 0,5 g/ml aufweist, wenn das Aerogel höchstens 75 Gew.-% Zn-Pyrithion umfasst.

5. Antifouling-Farbzusammensetzung zur Verwendung auf marinen Oberflächen nach Anspruch 4, wobei die marinen Oberfläche der Rumpf oder die Oberfläche eines Boots, einer Freizeityacht oder eines Handelsschiffs, wie eines Containerschiffs, oder eine in Wasser getauchte statische Konstruktion ist.

6. Antifouling-Farbzusammensetzung zur Verwendung auf marinen Oberflächen nach Anspruch 4-5, wobei das Antifouling-Additiv wenigstens 75 Gew.-% der einen oder mehreren bioziden oder bioabweisenden Verbindungen umfasst, wie wenigstens 80 % oder wie wenigstens 85 %.

7. Antifouling-Farbzusammensetzung zur Verwendung auf marinen Oberflächen nach einem der Ansprüche 4 bis 6, wobei das Antifouling-Additiv eine biozide oder bioabweisende Verbindung ausgewählt aus Kupferpyrithion oder Zink-Pyrithion umfasst.

8. Antifouling-Farbzusammensetzung zur Verwendung auf marinen Oberflächen nach einem der Ansprüche 4 bis 7, umfassend eine Menge an Antifouling-Additiv, die 1-4 % Gew./Gew. Biozid in dem Trockenfarbfilm für Farbzusammensetzungen entspricht, die für Boote und Freizeityachten geeignet sind.

9. Antifouling-Farbzusammensetzung zur Verwendung auf marinen Oberflächen nach einem der Ansprüche 4 bis 8, umfassend eine Menge an Antifouling-Additiv, die wenigstens 4 % Gew./Gew. Biozid in dem Trockenfarbfilm für Farbzusammensetzungen entspricht, die für kommerzielle Schiffe, wie ein Containerschiff, oder die Oberfläche einer in Wasser getauchten statischen Konstruktion geeignet sind.

10. Verfahren zum Verhindern von Fouling einer marinen Oberfläche, umfassend Anstreichen der Oberfläche mit einer Antifouling-Farbzusammensetzung nach einem der Ansprüche 4-9.

## Revendications

1. Utilisation d'un additif antisalissure comprenant
a) un aérogel inorganique contenant de la silice, comprenant
b) un réseau de gel poreux et
c) facultativement un alcoxyde comprenant Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb ou Lu, et
d) un ou plusieurs composés biocides ou biorépulsifs choisis parmi la pyrithione de zinc, la pyrithione de cuivre, le thiocyanate de cuivre, le tolylfluanide, le dichlofluanide, le DCOIT/Sea-Nine, le Zineb = {Zn[S2CN(H)CH2CH2N(H)CS2]}n = l'éthylènebisthiocarbamate de zinc et l'Econea^{®} = le 2-(p-chlorophényl)-3-cyano-4-bromo-5-trifluorométhylpyrrole (tralopyril) piégés dans ledit aérogel,
dans des peintures et revêtements marin(e)s, dans laquelle ledit aérogel contenant de la silice comprend au moins 60 % en poids du ou des composés biocides ou biorépulsifs et dans laquelle le piégeage dudit ou desdits composés biocides ou biorépulsifs a lieu pendant la formation sol-gel du gel et dans laquelle la masse volumique apparente dudit aérogel a une valeur d'au maximum 0,5 g/ml lorsque ledit aérogel comprend au maximum 75 % en poids de pyrithione de Zn.

2. Utilisation d'un additif antisalissure selon la revendication 1, ledit additif comprenant au moins 75 % en poids du ou des composés biocides ou biorépulsifs, par exemple au moins 80 % ou par exemple au moins 85 %.

3. Utilisation d'un additif antisalissure selon l'une quelconque des revendications 1 à 2 dans laquelle le composé biocide ou biorépulsif est choisi parmi la pyrithione de cuivre et la pyrithione de zinc.

4. Composition de peinture antisalissure destinée à être utilisée sur des surfaces marines, comprenant un support ou liant approprié et un additif antisalissure comprenant
a) un aérogel inorganique contenant de la silice, comprenant
b) un réseau de gel poreux et
c) facultativement un alcoxyde comprenant Sc, Ti, V, Cr, Mn, Fe, Co, Y, Zr, Nb, Ru, Hf, Ta, W, Re, Al, Ge, In, La, Pr, Nd, Sm, Eu, Gd, Tb, Dy, Ho, Er, Tm, Yb ou Lu, et
d) un ou plusieurs composés biocides ou biorépulsifs choisis parmi la pyrithione de zinc, la pyrithione de cuivre, le thiocyanate de cuivre, le tolylfluanide, le dichlofluanide, le DCOIT/Sea-Nine, le Zineb = {Zn[S2CN(H)CH2CH2N(H)CS2]}n = l'éthylènebisthiocarbamate de zinc et l'Econea^{®} = le 2-(p-chlorophényl)-3-cyano-4-bromo-5-trifluorométhylpyrrole (tralopyril) piégés dans ledit aérogel,
dans laquelle ledit aérogel contenant de la silice comprend au moins 60 % en poids du ou des composés biocides ou biorépulsifs et dans laquelle le piégeage dudit ou desdits composés biocides ou biorépulsifs a lieu pendant la formation sol-gel du gel et dans laquelle la masse volumique apparente dudit aérogel a une valeur d'au maximum 0,5 g/ml lorsque ledit aérogel comprend au maximum 75 % en poids de pyrithione de Zn.

5. Composition de peinture antisalissure destinée à être utilisée sur des surfaces marines selon la revendication 4, dans laquelle la surface marine est la coque ou la surface d'un bateau, d'un yacht de plaisance ou d'un navire commercial tel qu'un bateau porte-conteneurs, ou une construction statique immergée dans l'eau.

6. Composition de peinture antisalissure destinée à être utilisée sur des surfaces marines selon les revendications 4 à 5, dans laquelle ledit additif antisalissure comprend au moins 75 % en poids du ou des composés biocides ou biorépulsifs, tel qu'au moins 80 % ou tel qu'au moins 85 %.

7. Composition de peinture antisalissure destinée à être utilisée sur des surfaces marines selon l'une quelconque des revendications 4 à 6, dans laquelle ledit additif antisalissure comprend un composé biocide ou biorépulsif choisi parmi la pyrithione de cuivre et la pyrithione de zinc.

8. Composition de peinture antisalissure destinée à être utilisée sur des surfaces marines selon l'une quelconque des revendications 4 à 7, comprenant une quantité d'additif antisalissure qui correspond à 1-4 % p/p de biocide dans le film de peinture sec pour des compositions de peinture appropriées pour des bateaux et des yachts de plaisance.

9. Composition de peinture antisalissure destinée à être utilisée sur des surfaces marines selon l'une quelconque des revendications 4 à 8, comprenant une quantité d'additif antisalissure qui correspond à au moins 4 % p/p de biocide dans le film de peinture sec pour des compositions de peinture appropriées pour des navires commerciaux tels qu'un bateau porte-conteneurs, ou la surface d'une construction statique immergée dans l'eau.

10. Procédé pour empêcher l'encrassement d'une surface marine, comprenant la peinture de la surface avec une composition de peinture antisalissure selon l'une quelconque des revendications 4 à 9.
